# EUROPEAN PATENT APPLICATION

(11) **EP 3 065 387 A1**
(43) Date of publication of application: **07.09.2016**
(21) Application number: 14858713.2
(22) Date of filing: 12.06.2014
(51) Int. Cl.: H04M 15/00

(54) **METHOD AND DEVICE FOR ACHIEVING MATCHING BETWEEN ACQUISITION SYSTEM AND ANALYSIS SYSTEM**

(30) Priority: 01.11.2013 CN 201310534870
(71) Applicant: ZTE Corporation, Shenzhen 518057 (CN)
(72) Inventor: WANG, Wei, Shenzhen Guangdong 518057 (CN); HAO, Jinlian, Shenzhen Guangdong 518057 (CN); YANG, Guirong, Shenzhen Guangdong 518057 (CN)
(74) Representative: Brunazzi, Stefano
(86) International application number: PCT/CN2014/079785
(87) International publication number: WO 2015/062281

(57) **Abstract**

Provided are a method and device for implementing matching between an acquisition system and an analysis system, relating to the technical field of communications. The method includes the following steps: an External Data Representation (xDR) telephone bill generated by an acquisition system is received through a receiving method according to a file mode or a Socket mode, so as to acquire an input xDR telephone bill; by using a preset data list, the input xDR telephone bill is converted into an output xDR telephone bill adapted to an analysis system; and the output xDR telephone bill is transmitted to the analysis system by using a transmitting method according to the file mode or the Socket mode. The present disclosure converts the xDR telephone bill, thereby improving the usability of a corresponding product, and the flexibility for a user to select a system and improving the degree of satisfaction of the user.

## Description

### Technical Field

The present disclosure relates to the technical field of communications, particularly to a method and device for implementing matching between an acquisition system and an analysis system.

### Background

For the telecommunication system, the main task is to provide various services to clients in the first few years. For example, the core network system evolves from the Second Generation (2G) to the Third Generation (2G) to the Fourth Generation (4G) or Long Term Evolution (LTE). After satisfying user demands, operators are confronted with the problem of improving the network quality and the satisfaction of clients. In order to improve the network quality and the satisfaction of the clients, a tool is required to analyze the network states and user behaviour. Therefore, an information acquisition device and a data analysis device of the telecommunication network have emerged as required.

Generally, the information acquisition device and the data analysis device are different devices, and the former aims at extracting information from the network and generating records, which are called External Data Representations (xDR) here, based on the primarily-processed information. The acquisition device transmits these xDRs to the data analysis device for analysis, presentation, and storage.

The technical point of the information acquisition device or component depends on the wide range of analysis protocols. The device itself is able to analyze various protocols, and find, from a large amount of acquired data, information that is helpful for a client to evaluate the network or user behaviour. Because of industries of manufacturers of information acquisition devices or the degree of familiarity of the manufacturer on the industries, information that can be acquired through analysis of a large amount of data is different in different industries, and there is also a similar problem for the information acquisition devices. Thus, information acquisition devices and data analysis devices of different manufacturers may be linked to implement better effect in some scenarios. However, a problem that two devices of different manufactures may have inconsistent interfaces is caused, thus the devices cannot be used directly.

At present, demands for network data acquisition, analysis and application are growing. However, there are no unified interfaces among various manufacturers. When different manufacturers are linked, acquisition systems and analysis systems of different manufacturers cannot be linked directly because of the lack of unified interfaces. Otherwise, software interfaces are modified, which not only results in a large amount of modification workload, and there is a risk of introducing software faults.

### Summary

Embodiments of the present disclosure provide a method and device for implementing matching between an acquisition system and an analysis system. An exit xDR of the acquisition system is used as an entry standard while an access xDR of the analysis system is used as an exit standard, and after processing of an intermediate device or component, the problem that the two cannot be linked or matched is solved.

A method for implementing matching between an acquisition system and an analysis system is provided according to an aspect of an embodiment of the present disclosure, including the following steps:
an xDR telephone bill generated by an acquisition system is received through a receiving method according to a file mode or a Socket mode, so as to acquire an input xDR telephone bill;
by using a preset data list, the input xDR telephone bill is converted into an output xDR telephone bill adapted to an analysis system; and
the output xDR telephone bill is transmitted to the analysis system by using a transmitting method according to the file mode or the Socket mode.

In an example embodiment, that by using the preset data list, the input xDR telephone bill is converted into the output xDR telephone bill adapted to the analysis system may include that:
the input xDR telephone bill is analyzed to determine an input type of the input xDR telephone bill;
an output type of the input xDR telephone bill is determined according to a preset corresponding relation table of input types and output types of xDR telephone bills; and
according to the determined output type, the input xDR telephone bill is converted into the output xDR telephone bill adapted to the analysis system.

In an example embodiment, that the input xDR telephone bill is analyzed to determine the input type of the input xDR telephone bill may include that:
the input xDR telephone bill is parsed to acquire an input type field in the xDR telephone bill;
a predefined input type table is looked up to acquire a type name of an input type corresponding to the input type field; and
the input type of the input xDR telephone bill is determined according to the acquired type name.

In an example embodiment, that according to the determined output type, the input xDR telephone bill is converted into the output xDR telephone bill adapted to the analysis system may include that:
a predefined output type table is looked up to acquire an output type field corresponding to the determined output type;
a numerical value in the input xDR telephone bill is acquired; and
using the acquired numerical value in the input xDR telephone bill and the acquired output type field, the input xDR telephone bill is converted into the output xDR telephone bill adapted to the analysis system.

In an example embodiment, the method may further include that:
whether the input xDR telephone bill can be converted into the output xDR telephone bill adapted to the analysis system is judged according to the acquired numerical value in the input xDR telephone bill and the acquired output type field;
when it is judged that the input xDR telephone bill can be converted into the output xDR telephone bill adapted to the analysis system, the output xDR telephone bill is transmitted to the analysis system; and
when it is judged that the input xDR telephone bill cannot be converted into the output xDR telephone bill adapted to the analysis system, the output xDR telephone bill is cached, or a default value is filled in and the output xDR telephone bill is transmitted to the analysis system.

In an example embodiment, the transmitting method or the receiving method according to the file mode or the Socket mode may include that:
the transmitting method or the receiving method according to the file mode is a transmitting method or a receiving method using File Transfer Protocol (FTP)/Secure File Transfer Protocol (SFTP); and
the transmitting method or the receiving method according to the Socket mode is a transmitting method or a receiving method using establishment of a Socket link,
wherein the FTP/SFTP refers to a file transfer protocol/secure file transfer protocol.

A device for implementing matching between an acquisition system and an analysis system is provided according to another aspect of an embodiment of the present disclosure, including:
an input xDR telephone bill acquiring component, configured to receive, through a receiving method according to a file mode or a Socket mode, an xDR telephone bill generated by an acquisition system, so as to acquire an input xDR telephone bill;
an input xDR telephone bill converting component configured to convert, by using a preset data list, the input xDR telephone bill into an output xDR telephone bill adapted to an analysis system; and
an xDR telephone bill transmitting component, configured to transmit the output xDR telephone bill to the analysis system by using a transmitting method according to the file mode or the Socket mode.

In an example embodiment, the input xDR telephone bill converting component may include:
a determining unit, configured to analyze the input xDR telephone bill to determine an input type of the input xDR telephone bill; and determine, according to a preset corresponding relation table of input types and output types of xDR telephone bills, an output type of the input xDR telephone bill; and
a converting unit configured to convert, according to the determined output type, the input xDR telephone bill into the output xDR telephone bill adapted to the analysis system.

In an example embodiment, the determining unit may include:
a determining sub-unit configured to parse the input xDR telephone bill to acquire an input type field in the xDR telephone bill; look up a predefined input type table to acquire a type name of an input type corresponding to the input type field; and determine, according to the acquired type name, the input type of the input xDR telephone bill.

In an example embodiment, the converting unit may include:
an acquiring sub-unit, configured to look up a predefined output type table to acquire an output type field corresponding to the determined output type; and acquire a numerical value in the input xDR telephone bill; and
a converting sub-unit, configured to use the acquired numerical value in the input xDR telephone bill and the acquired output type field to convert the input xDR telephone bill into the output xDR telephone bill adapted to the analysis system.

Compared with the traditional art, the embodiments of the present disclosure have the following beneficial effect.

In the embodiments of the present disclosure, an xDR telephone bill is converted to solve the problem that an acquisition system and an analysis system are incompatible, thus improving the usability of a corresponding product, and the flexibility for a user to select a system and improving the degree of satisfaction of the user.

### Brief Description of the Drawings

Fig. 1 is a flowchart of a method for implementing matching between an acquisition system and an analysis system according to an embodiment of the present disclosure;
Fig. 2 is a schematic diagram of a device for implementing matching between an acquisition system and an analysis system according to an embodiment of the present disclosure;
Fig. 3 is a schematic diagram of a matching structure between an acquisition system and an analysis system according to an embodiment of the present disclosure;
Fig. 4 is a flowchart of a configuration operation between an acquisition system and an analysis system according to an embodiment of the present disclosure; and
Fig. 5 is a flowchart of conversion between an acquisition system and an analysis system according to an embodiment of the present disclosure.

### Detailed Description of the Embodiments

Example embodiments of the present disclosure will be expounded below with reference to the accompanying drawings. It should be understood that the preferred embodiments described hereinafter are only used for describing and explaining the present disclosure, instead of limiting the present disclosure.

Hardware devices run by the present disclosure may be Personal Computers (PC), various servers, standard Advanced Telecom Computing Architecture (ATCA) blade servers, or dedicated hardware and so on. There is no limitation on hardware types, and any hardware capable of supporting data operation is available. Interfaces of a hardware device should at least satisfy: an input port responsible for access of telephone bill data, and an output port responsible for output of converted telephone bill data, wherein accessories are required to be able to process input and output data, and satisfy a processing capability of conversion operation.

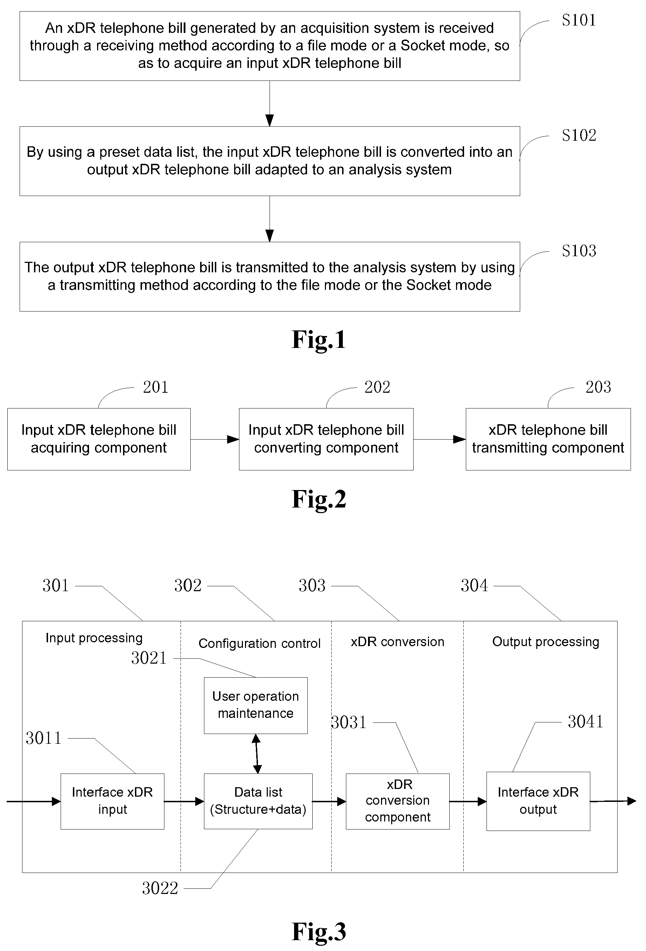

Fig. 1 shows a flowchart of a method for implementing matching between an acquisition system and an analysis system according to an embodiment of the present disclosure. As shown in Fig. 1, the method includes the following steps.

Step S101: An xDR telephone bill generated by an acquisition system is received through a receiving method according to a file mode or a Socket mode, so as to acquire an input xDR telephone bill.

Step S102: By using a preset data list, the input xDR telephone bill is converted into an output xDR telephone bill adapted to an analysis system.

Step S103: The output xDR telephone bill is transmitted to the analysis system by using a transmitting method according to the file mode or the Socket mode.

In the steps, that by using the preset data list, the input xDR telephone bill is converted into the output xDR telephone bill adapted to the analysis system includes that: the input xDR telephone bill is analyzed to determine an input type of the input xDR telephone bill; an output type of the input xDR telephone bill is determined according to a preset corresponding relation table of input types and output types of xDR telephone bills; and according to the determined output type, the input xDR telephone bill is converted into the output xDR telephone bill adapted to the analysis system.

Specifically, that the input xDR telephone bill is analyzed to determine the input type of the input xDR telephone bill includes that: the input xDR telephone bill is parsed to acquire an input type field in the xDR telephone bill; a predefined input type table is looked up to acquire a type name of an input type corresponding to the input type field; and the input type of the input xDR telephone bill is determined according to the acquired type name.

Specifically, that according to the determined output type, the input xDR telephone bill is converted into the output xDR telephone bill adapted to the analysis system includes that: a predefined output type table is looked up to acquire an output type field corresponding to the determined output type; a numerical value in the input xDR telephone bill is acquired; and using the acquired numerical value in the input xDR telephone bill and the acquired output type field, the input xDR telephone bill is converted into the output xDR telephone bill adapted to the analysis system.

The present disclosure further includes that: whether the input xDR telephone bill can be converted into the output xDR telephone bill adapted to the analysis system is judged according to the acquired numerical value in the input xDR telephone bill and the acquired output type field; when it is judged that the input xDR telephone bill can be converted into the output xDR telephone bill adapted to the analysis system, the output xDR telephone bill is transmitted to the analysis system; and when it is judged that the input xDR telephone bill cannot be converted into the output xDR telephone bill adapted to the analysis system, the output xDR telephone bill is cached, or a default value is filled in and the output xDR telephone bill is transmitted to the analysis system,
wherein the transmitting method or the receiving method according to the file mode or the Socket mode may include that: the transmitting method or the receiving method according to the file mode is a transmitting method or a receiving method using FTP/ SFTP; and the transmitting method or the receiving method according to the Socket mode is a transmitting method or a receiving method using establishment of a Socket link, wherein the FTP/SFTP refers to a file transfer protocol/secure file transfer protocol.

Fig. 2 shows a schematic diagram of a device for implementing matching between an acquisition system and an analysis system according to an embodiment of the present disclosure. As shown in Fig. 2, the device includes: an input xDR telephone bill acquiring component 201, configured to receive, through a receiving method according to a file mode or a Socket mode, an xDR telephone bill generated by an acquisition system, so as to acquire an input xDR telephone bill; an input xDR telephone bill converting component 202 configured to convert, by using a preset data list, the input xDR telephone bill into an output xDR telephone bill adapted to an analysis system; and an xDR telephone bill transmitting component 203, configured to transmit the output xDR telephone bill to the analysis system by using a transmitting method according to the file mode or the Socket mode,
wherein the input xDR telephone bill converting component 202 includes: a determining unit, configured to analyze the input xDR telephone bill to determine an input type of the input xDR telephone bill; and determine, according to a preset corresponding relation table of input types and output types of xDR telephone bills, an output type of the input xDR telephone bill; and
a converting unit configured to convert, according to the determined output type, the input xDR telephone bill into the output xDR telephone bill adapted to the analysis system.

Specifically, the determining unit includes: a determining sub-unit configured to parse the input xDR telephone bill to acquire an input type field in the xDR telephone bill; look up a predefined input type table to acquire a type name of an input type corresponding to the input type field; and determine, according to the acquired type name, the input type of the input xDR telephone bill.

Specifically, the converting unit includes: an acquiring sub-unit, configured to look up a predefined output type table to acquire an output type field corresponding to the determined output type; and acquire a numerical value in the input xDR telephone bill; and a converting sub-unit, configured to use the acquired numerical value in the input xDR telephone bill and the acquired output type field to convert the input xDR telephone bill into the output xDR telephone bill adapted to the analysis system.

The main idea of the present disclosure is that a method for converting an xDR telephone bill into another xDR telephone bill is designed into a configurable method: Step A. support to different physical/software interfaces; Step B. configuration of xDR telephone bill conversion; Step C. addition of a telephone bill conversion process in a system.

Step A further includes: Step A1. a physical interface supports AJ45 (but is not limited to AJ45); Step A2: definition of a software interface. Step B further includes: Step B1: an xDR conversion table is created; Step B2: an entry and exit standard xDR table is created; Step B3: an xDR configuration command is converted; Step B4: an xDR maintenance command is converted. Step C further includes: Step C1: data of the configured conversion table is read; Step C2: xDR conversion is performed according to a content of a configuration table; Step C3: abnormality processing for the conversion process.

Fig. 3 shows a schematic diagram of a matching structure between an acquisition system and an analysis system according to an embodiment of the present disclosure. As shown in Fig. 3, the followings are included: input processing 301, configuration control 302, xDR conversion 303 and output processing 304, wherein the input processing 301 includes interface xDR input 3011, the configuration control 302 includes user operation maintenance 3021 and a data list (structure+data) 3022, the xDR conversion 303 includes an xDR conversion component 3031 and the output processing 304 includes interface xDR output 3041,
wherein there are two common methods for receiving and transmitting an xDR telephone bill in the input processing 301 and the output processing 304: a file mode and a Socket mode.

File mode: A network element of a front end generates an xDR file, and a network element of a back end acquires the file by means of FTP/SFTP and so on and parses the same, which is a non-real time method.

Socket mode: A network connection is established between network elements of a front end and a back end by a Socket method, the network element of the front end generates an xDR and then transmits the same to the network element of the back end in time, which is a real time method.

Input and output processing of the present disclosure mainly includes the following process.

A Socket link is established first between an acquisition system and the present disclosure (or between an analysis system and the present disclosure).

The Socket link needs to be established during the configuration control. In other words, after the Socket link is configured, the Socket link may be established between two network elements and a data packet is transmitted.

The acquisition system or the analysis system should be able to specify its external interface structures and agreements,
wherein the user operation maintenance 3021 of the configuration control 302 mainly determines various configuration through human-machine commands, mainly including several configuration contents as follows:
an xDR mode: indicating whether the file transfer mode or the Socket mode is used between the present disclosure and the acquisition system, and between the present disclosure and the analysis system so as to determine whether an operation for a file is performed through the file mode or the Socket mode;
a Socket link: configuration for creating the Socket link between the acquisition system and the present disclosure (or the analysis system and the present disclosure); this configuration is available only when the Socket mode is used. Such configuration mainly configures a server, a client, and used Internet Protocol (IP) addresses, ports, protocol types and so on of the two parties;
a conversion method: configuration of a conversion parameter of an xDR telephone bill.

It is provided that there are 3 types of xDR input telephone bills, which are defined as input type 1, input type 2, and input type 3.

It is provided that there are 2 types of output telephone bills, which are defined as output type 1 and output type 2, and each type has a plurality of users,
wherein contents involved in the configuration are as follows: configuration of xDR keywords: a keyword in each type is configured, and xDRs of the same user information stream among a group of xDRs of the same type are determined according to these keywords; configuration of a corresponding relation table: fields in a type, which are generated according to an operation from fields of an input type; and setting of a default value: a default output value is set for a field in an output type that data cannot be acquired from an input type,
wherein an interface transmission structure of the data list (data+structure)3022 of the configuration control 302 includes: Method, FTPTable and SocketTable.

Values of the Method are 0, 1, and 2 respectively, wherein 0 represents the Socket mode, 1 represents an FTP method of the file mode and 2 represents an SFTP method of the file mode.

The FTPTable is a table, configuring some necessary parameters of the FTP/SFTP methods.
There are three table fields: IP: IP addresses for configuring FTP/SFTP;
User: configuring a username;
Password: configuring a password corresponding to the username.

The SocketTable is a table, configuring some parameters used during Socket connection.
There are 6 table fields: LocalPort: an IP address of a local terminal;
LocalPort: a port of the local terminal;
RemoteIP: an IP address of a remote terminal;
RemotePort: a port of the remote terminal;
Protocol: a protocol type, such as User Datagram Protocol (UDP);
Server: representing whether a local side is a server;

### 1. the server and 0 represents a client.

A keyword structure table as shown by the following Table 1:

**Table 1: Keyword structure**

| | Keyword 1 | ......... | Keyword N |
|---|---|---|---|
| Input type 1 | | | |
| ......... | | | |
| Input type | | | |

| | | | |
|---|---|---|---|
| Note: the table is a keyword table; when xDRs are received, fields used as keywords in these received xDRs are determined according to the keyword table; in the meanwhile, it is necessary to add a keyword usage linked table in order to prevent the same keyword from being having been allocated to other user for use when the fields are used as the keywords, and in the meanwhile, it is also necessary to add a timeout timer in order to prevent a terminator provided by another terminal from being lost, and it is believed that a current keyword has been allocated to other users for use when the timer expires. | | | |

An xDR type corresponding relation table as shown in the following Table 2:

**Table 2: xDR type corresponding relation table**

| | Output type 1 | ......... | Output type N |
|---|---|---|---|
| Input type 1 | | | |
| ......... | | | |
| Input type | | | |

| | | | |
|---|---|---|---|
| Note: an xDR of an input type that generates an xDR of an output type is determined by the table. | | | |

An xDR input type table as shown in the following Table 3:

**Table 3: xDR input type table**

| Field name | Type | Numerical value |
|---|---|---|
| Field 1 | Type 1 | |
| ......... | ......... | |
| Field N | Type N | |

| | | |
|---|---|---|
| Note: fields of xDRs of input types are determined in the table; when xDRs are received, numerical values are filled in the table, wherein the numerical values are formed by fields of the xDRs, and the numerical values refer to values filled in the fields, such as parameters, character strings. | | |

An xDR output type table as shown in the following Table 4.

**Table 4: xDR output type**

| Field name | Type | Formula | Default value |
|---|---|---|---|
| Field 1 | Type 1 | | |
| ......... | ......... | | |
| Field N | Type N | | |

| | | | |
|---|---|---|---|
| Note: fields of xDRs of output types are determined in the table; when xDRs are generated, numerical values are filled in the table, and finally the numerical values are in the table are generated into xDRs transmitted to the data analysis system; a formula for generating an output type field by an input type is filled in the formula column; for example: input type 1. field 3+input type 2. field 5*5; when data cannot be acquired, a default value is used. | | | |

The xDR conversion 303 includes; the xDR conversion component 3031, which is a major operation component. When an xDR is received, operation is performed according to the configuration table above, and a converted xDR is generated. If complete calculation information is acquired, calculation is performed and a field value in the xDR is generated. Otherwise, caching is performed temporarily. Calculation is performed after required information is complete. If complete information is not received until the timer expires, a default value is filled in.

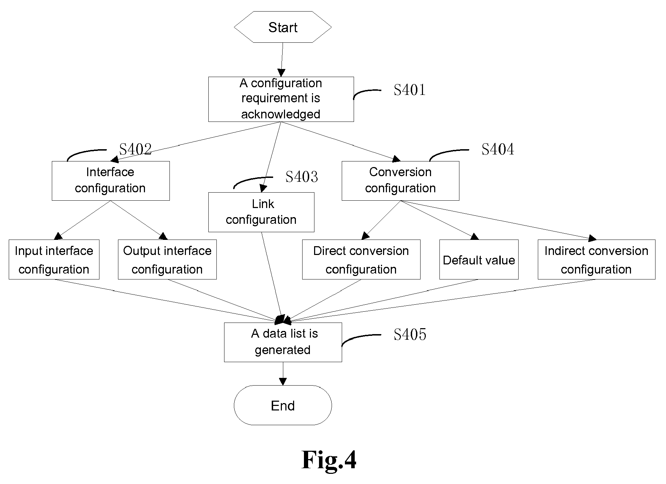

Fig. 4 shows a flowchart of a configuration operation between an acquisition system and an analysis system according to an embodiment of the disclosure. As shown in Fig. 4, the configuration operation includes the following steps.

Step S401: A user needs to specific contents that need to be configured.

Such as a link method, an input type field table, an output type field table, a corresponding relation table of input types and output types.

Step S402: Link configuration.
the link connecting the acquisition system and the link connecting the data analysis system.

Step S403: Interface configuration.

An input type relation table is configured, it is necessary to reflect information and keywords of various fields in the table.

Step S404: Conversion configuration.

An output relation table, corresponding relations of fields between output types and input types, and a conversion calculation formula are configured, and in the meanwhile, it is also necessary to consider processing on a default value.

Step S405: A data list is generated by a plurality of configuration above.

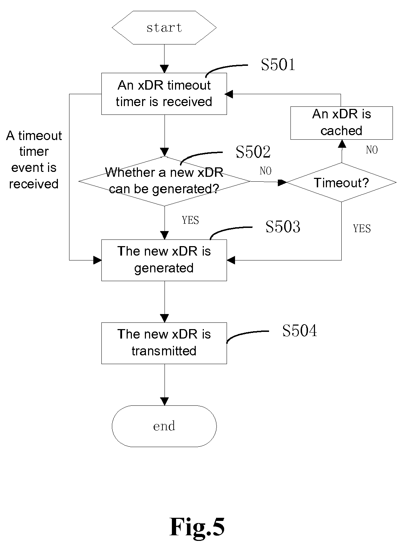

Fig. 5 shows a flowchart of conversion between an acquisition system and an analysis system according to an embodiment of the present disclosure. As shown in Fig. 5, the conversion includes the following steps.

Step S501: An xDR timeout timer is received in a waiting state.

Step S502: When an xDR is received, whether the xDR can be converted to generate a new xDR is checked.

When the xDR is received, whether received information is complete and whether an xDR can be generated is analyzed. If so, Step S503 is performed. Otherwise, whether the timer expires is checked. If so, the telephone bill is filled in according to a default value and transmitted to the data analysis system in real time. Otherwise, the received xDR and the xDR that has not been generated completely are cached, and reception of a next xDR or a timer event is waited. If a new xDR is not received, and a timer timeout message is received, the telephone bill may be also filled in according to the default value.

Step S503: A new xDR is generated.

Step S504: The new xDR is transmitted to the data analysis system.

To sum up, the present disclosure relates to a method and a thought for performing interface conversion when an acquisition system and an analysis system in a telecommunications system are not from the same manufacturer. Although the present disclosure is applied in data analysis of a telecommunications system at present, application is not limited to the telecommunications system, and the same method and thought may be also applied in devices or software in information analysis of the Internet.

To sum up, the present disclosure has the following technical effect.

The present disclosure converts an input xDR telephone bill acquired by a universal interface in an acquisition system to generate an output xDR telephone bill of another universal interface, thereby improving the compatibility between the acquisition system and an analysis system, while improving the usability of a product and the degree of satisfaction of a user.

Although the present disclosure has been expounded above, the present disclosure is not limited thereto, and those skilled in the art may make various modifications according to the principles of the present disclosure. Therefore, any modifications made according to the principles of the present disclosure should be understood as falling into the protection scope of the present disclosure.

## Claims

1. A method for implementing matching between an acquisition system and an analysis system, comprising:
receiving, through a receiving method according to a file mode or a Socket mode, an External Data Representation (xDR) telephone bill generated by an acquisition system, so as to acquire an input xDR telephone bill;
by using a preset data list, converting the input xDR telephone bill into an output xDR telephone bill adapted to an analysis system; and
transmitting the output xDR telephone bill to the analysis system by using a transmitting method according to the file mode or the Socket mode.

2. The method as claimed in claim 1, wherein by using the preset data list, converting the input xDR telephone bill into the output xDR telephone bill adapted to the analysis system comprises:
analyzing the input xDR telephone bill to determine an input type of the input xDR telephone bill;
determining, according to a preset corresponding relation table of input types and output types of xDR telephone bills, an output type of the input xDR telephone bill; and
converting, according to the determined output type, the input xDR telephone bill into the output xDR telephone bill adapted to the analysis system.

3. The method as claimed in claim 2, wherein analyzing the input xDR telephone bill to determine the input type of the input xDR telephone bill comprises:
parsing the input xDR telephone bill to acquire an input type field in the xDR telephone bill;
looking up a predefined input type table to acquire a type name of an input type corresponding to the input type field; and
determining, according to the acquired type name, the input type of the input xDR telephone bill.

4. The method as claimed in claim 2, wherein converting, according to the determined output type, the input xDR telephone bill into the output xDR telephone bill adapted to the analysis system comprises:
looking up a predefined output type table to acquire an output type field corresponding to the determined output type;
acquiring a numerical value in the input xDR telephone bill; and
using the acquired numerical value in the input xDR telephone bill and the acquired output type field, converting the input xDR telephone bill into the output xDR telephone bill adapted to the analysis system.

5. The method as claimed in any one of claims 1 to 4, wherein the method further comprises:
judging, according to the acquired numerical value in the input xDR telephone bill and the acquired output type field, whether the input xDR telephone bill can be converted into the output xDR telephone bill adapted to the analysis system;
when it is judged that the input xDR telephone bill can be converted into the output xDR telephone bill adapted to the analysis system, transmitting the output xDR telephone bill to the analysis system; and
when it is judged that the input xDR telephone bill cannot be converted into the output xDR telephone bill adapted to the analysis system, caching the output xDR telephone bill, or filling in a default value and transmitting the same to the analysis system.

6. The method as claimed in claim 1, wherein the transmitting method or the receiving method according to the file mode or the Socket mode comprises:
the transmitting method or the receiving method according to the file mode is a transmitting method or a receiving method using File Transfer Protocol (FTP)/Secure File Transfer Protocol (SFTP); and
the transmitting method or the receiving method according to the Socket mode is a transmitting method or a receiving method using establishment of a Socket link,
wherein the FTP/SFTP refers to a file transfer protocol/secure file transfer protocol.

7. A device for implementing matching between an acquisition system and an analysis system, comprising:
an input External Data Representation (xDR) telephone bill acquiring component, configured to receive, through a receiving method according to a file mode or a Socket mode, an xDR telephone bill generated by an acquisition system, so as to acquire an input xDR telephone bill;
an input xDR telephone bill converting component configured to convert, by using a preset data list, the input xDR telephone bill into an output xDR telephone bill adapted to an analysis system; and
an xDR telephone bill transmitting component, configured to transmit the output xDR telephone bill to the analysis system by using a transmitting method according to the file mode or the Socket mode.

8. The device as claimed in claim 7, wherein the input xDR telephone bill converting component comprises:
a determining unit, configured to analyze the input xDR telephone bill to determine an input type of the input xDR telephone bill; and determine, according to a preset corresponding relation table of input types and output types of xDR telephone bills, an output type of the input xDR telephone bill; and
a converting unit configured to convert, according to the determined output type, the input xDR telephone bill into the output xDR telephone bill adapted to the analysis system.

9. The device as claimed in claim 8, wherein the determining unit comprises:
a determining sub-unit configured to parse the input xDR telephone bill to acquire an input type field in the xDR telephone bill; look up a predefined input type table to acquire a type name of an input type corresponding to the input type field; and determine, according to the acquired type name, the input type of the input xDR telephone bill.

10. The device as claimed in claim 8, wherein the converting unit comprises:
an acquiring sub-unit, configured to look up a predefined output type table to acquire an output type field corresponding to the determined output type; and acquire a numerical value in the input xDR telephone bill; and
a converting sub-unit, configured to use the acquired numerical value in the input xDR telephone bill and the acquired output type field to convert the input xDR telephone bill into the output xDR telephone bill adapted to the analysis system.
